# EUROPEAN PATENT SPECIFICATION

(11) **EP 3 340 740 B1**
(45) Date of publication and mention of the grant of the patent: **23.09.2020**
(21) Application number: 16206304.4
(22) Date of filing: 22.12.2016
(51) Int. Cl.: H05B 33/08, H02M 1/15

(54) **METHOD AND CIRCUIT FOR ELIMINATING FLICKER FROM THE LIGHT EMITTED BY LEDS**
VERFAHREN UND SCHALTUNG ZUR BESEITIGUNG DES FLACKERNS AUS DEM VON LEDS ABGEGEBENEN LICHT
PROCÉDÉ ET CIRCUIT DE SUPPRESSION DU SCINTILLEMENT À PARTIR DE LA LUMIÈRE ÉMISE PAR LES DEL

(43) Date of publication of application: 27.06.2018
(73) Proprietor: Helvar Oy Ab, 02150 Espoo (FI)
(72) Inventor: PIRKKALANIEMI, Jussi, 02150 Espoo (FI)
(74) Representative: Papula Oy

(56) References cited:
- US-A1- 2014 085 945
- Lighting Driver ET AL: "LED Lighting Output Current Ripple Suppressor General Description", , 31 July 2016 (2016-07-31), XP055358413, Retrieved from the Internet: URL:http://www.leadtrend.com.tw/archive/do c/product/sheets/LD6801-DS-00.pdf [retrieved on 2017-03-24]

## Description

### FIELD OF THE INVENTION

The invention relates to eliminating flicker from the light emitted by semiconductor light sources such as LEDs. In particular the invention relates to eliminating flicker that results from the output current ripple caused by a rectified mains AC voltage when the driver device has a linear regulator type output stage.

### BACKGROUND OF THE INVENTION

A vast majority of lighting is supplied with mains power from an AC voltage network, at typically either 120 or 230 volts and 50 or 60 hertz. Semiconductor light sources such as LEDs require DC and regulated current, for which purpose a driver device is used between the AC mains and the LEDs. Designing a driver device involves a number of decisions that try to balance factors like performance, expected lifetime, and manufacturing cost. One of the principal decisions is the number and composition of consecutive stages in the driver device: basically the more stages there are the better is the quality of output current, but also the higher are the manufacturing costs and the more circuit board space is needed.

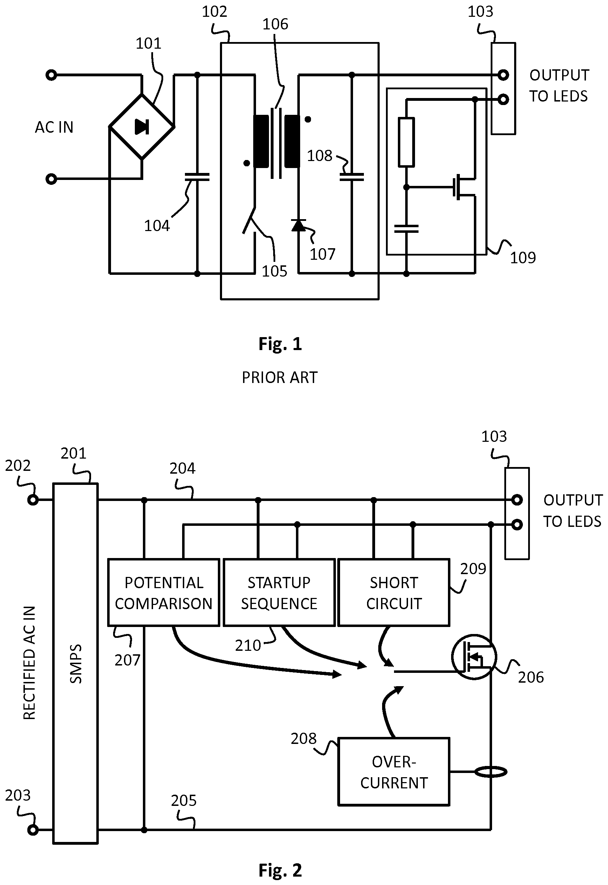

Fig. 1 illustrates schematically a relatively simple driver device that comprises a rectifier 101, a flyback type converter 102, and an output 103 for connecting the LEDs. The rectifier 101 produces a full wave rectified, pulsating DC voltage that is smoothened somewhat with a capacitor 104. A power switch 105 performs on-off switching at a frequency that is significantly higher than the AC frequency, causing a periodic current to flow through the primary winding of the flyback transformer 106. The polarity of the windings and the existence of the secondary side diode 107 cause energy to be discharged to the secondary side, where the created secondary voltage is smoothened with another capacitor 108. However, some of the pulsating nature of the full wave rectified primary side voltage remains even in the voltage that is generated across the output 103 in the form of output current ripple, resulting in the LEDs flickering at twice the AC network frequency.

In theory it would be possible to reduce said flickering by using sufficiently large capacitors 104 and 108, but in practice that would require so large capacitance values that neither the cost nor the space requirements would be acceptable.

In an attempt to reduce said flickering the driver device of fig. 1 comprises a linear regulator type output stage 109. A field-effect transistor is coupled between the lower pole of the output 103 and the local ground rail of the secondary side, and a bias voltage is coupled to the gate of the field-effect transistor from the middle point of an RC series connection between said lower pole of the output 103 and said local ground rail. The use of a linear regulator type output stage of this kind is known from a prior art publication US 8,310,172 B2 . According to the description in said document, the RC series connection acts as a low pass filter, the cut-off frequency of which is at least five times less than the low-frequency ripple (= ripple at twice the network frequency) caused by the full-wave rectified pulsating DC voltage.

The use of a linear regulator type output stage 109 is only a partial solution to the problem. Namely, since the FET in the linear regulator type output stage 109 is operated in linear mode, it essentially turns a major part of the electric energy associated with the ripple into heat. Not only does this heat represent wasted energy, but it also heats up the rest of the circuit, in particular the capacitor 108, which may be an electrolytic capacitor. Running an electrolytic capacitor hot causes its electrolyte to slowly dry up, which reduces the capacitance and causes a vicious circle: a decreasing capacitance on the secondary side of the flyback converter means increasing ripple, which generates even more heat in the FET, which heats up the capacitor 108 even more, and so on until the circuit destroys itself.

A prior art document US 2014/0085945 A1 discloses a current ripple suppression circuit that has a first end and a second end. The first end if coupled to the load and the second end is coupled to a reference ground. The current ripple suppression circuit is configured to suppress current ripple in the output current and adaptively adjust the output current at a predetermined current level.

Another prior art document Lighting Driver et al: "LED Lighting Output Current Ripple Suppressor General Description, 31 July 2016, discloses an output current ripple suppressor for LED lighting.

### SUMMARY OF THE INVENTION

It is an objective of the present invention to provide a method and a circuit for driving current through one or more semiconductor light sources, reducing or eliminating flicker that would result from rectified AC used as an input to the driver device. Another objective of the invention is to reduce the amount of waste heat produced in a method and circuit where a linear regulator is coupled in series with semiconductor light sources. A further objective of the invention is to provide a method and a circuit of the kind described above with an advantageously low number of components. Yet another objective of the invention is to combine the method and circuit of the kind described above with suitable protective and auxiliary functions, like overcurrent protection, short circuit protection, and appropriate startup sequence.

The objectives of the invention are achieved by controlling the regulation performed by said linear regulator in proportion to the voltage across the linear regulation, which voltage includes the pulsating component resulting from the rectified AC.

According to an aspect of the invention there is provided a driver device for one or more semiconductor light sources. The characteristic features of the driver device are listed in the independent claim directed to a driver device.

According to another aspect of the invention there is provided a method, the characteristic features of which are listed in the independent claim directed to a method.

The invention is related to driving semiconductor light sources, such as LEDs, OLEDs, laser diodes, or the like. For simplicity the word LEDs is often used while the meaning is not to limit the discussion to just LEDs in a narrow sense but to semiconductor light sources in general.

The exemplifying embodiments of the invention presented in this patent application are not to be interpreted to pose limitations to the applicability of the appended claims. The verb "to comprise" and its derivatives are used in this patent application as an open limitation that does not exclude the existence of features that are not recited. The features described hereinafter are mutually freely combinable unless explicitly stated otherwise.

The novel features which are considered as characteristic of the invention are set forth in particular in the appended claims. The invention itself, however, both as to its construction and its method of operation, together with additional objects and advantages thereof, will be best understood from the following detailed description of specific embodiments when read in connection with the accompanying drawings. The invention is disclosed by the subject matter of the independent claims.

### BRIEF DESCRIPTION OF THE DRAWINGS

- Figure 1: illustrates a relatively simple driver device for LEDs,
- figure 2: illustrates a principle of using a linear regulator for a number of purposes in a driver device for LEDs,
- figure 3: illustrates a principle of controlling the regulation performed by a linear regulator in proportion to a voltage across it,
- figure 4: illustrates another embodiment of a circuit that controls the regulation performed by a linear regulator in proportion to a voltage across it,
- figure 5: illustrates an example of an overcurrent protector, and
- figure 6: illustrates a coupling that can be used both for short circuit protection and for ensuring a proper startup sequence.

### DETAILED DESCRIPTION

Fig. 2 is a schematic illustration of a driver device for one or more semiconductor light sources. It comprises a switched-mode power supply 201 that is coupled to receive a rectified AC voltage across the input nodes 202 and 203. The rectifier that produces said rectified AC voltage may be a part of the driver device, or it may be located in a different device, for example in such lighting systems where a shared power hub distributes rectified AC to a number of lighting devices. For the purposes of the present invention it may be assumed that the rectified AC voltage is not perfectly smooth DC but has some pulsating nature, as is typical to half wave or full wave rectified AC coming from a diode bridge or the like.

The switched-mode power supply 201 is configured to convert the rectified AC voltage into a DC voltage between a first rail 204 and a second rail 205. The switched-mode power supply 201 may be for example a flyback converter of the same kind as in fig. 1, or it may have some other topology, like that of a buck converter, boost converter, buck/boost converter, SEPIC converter, Zuk converter, or the like. The DC voltage between the rails 204 and 205 is DC in the sense that it can be used to drive semiconductor light sources, which typically are polarity sensitive and require a constant coupling to positive and negative nodes of the driver output. However, despite being called DC said voltage may contain variations, for example when the switched-mode power supply 201 is repeatedly enabled and disabled at a frequency of some hundreds of Hz or some kHz and at a particular duty cycle to dim the light. The second rail 205 can be called the lower rail because it is shown at the lower part of the circuit diagram and also because its potential is typically the lower one. Its potential can also be called the neutral potential, or local ground potential, or 0V.

The driver device comprises an output 103 for coupling the one or more semiconductor light sources. The output 103 may have the physical appearance of a connector on a circuit board or at the outer cover of the driver device, or it may be just a pair of conductive tracks or fixedly attached wires that allow the driver device to driver electric current through the semiconductor light sources. The last-mentioned alternatives are particularly applicable in cases where the driver device and the semiconductor light sources constitute an integrated entity, like a so-called retrofit lamp or a LED device in which the driver electronics and light sources share a common support structure. The output 103 comprises a first node and a second node, corresponding to the anode(s) and the cathode(s) of the semiconductor light source(s). As such the interface between a driver device and a LED module that comprises semiconductor light sources may comprise more than two nodes or conductors, for example in cases where one or more additional wires are used to exchange identification information or the like between the two devices. However, because such additional conductors have little significance to the present invention they are neither described here nor shown in the drawings.

The upper node of the output 103 in fig. 2 is coupled essentially directly to the first rail 204 mentioned above. The coupling does not need to be direct, but it may involve intermediate components, for example with filtering and/or measurement functions. Assuming that the polarity of the output of the switched-mode power supply 201 is the same (in graphical representation) as in fig. 1, the upper node of the output 103 is coupled to the positive rail of the DC voltage produced by the switched-mode power supply 201.

The two nodes of the output 103 are those through which the main current path (or at least one major current path) will go between the driver device and the semiconductor light sources. A significant task of the driver device is to ensure that an electric current of intended magnitude flows through this current path, so that the semiconductor light sources light up at power-up, emit light at a desired intensity when power is on, and dim down when power is cut. The driver device should also comprise safety functions such as short circuit protection and overcurrent protection, so that no exceptional situation like a short circuit between the nodes of the output 103 can cause hazardous situations or damage the device and its surroundings. The driver device should typically also ensure that the electric current through the semiconductor light sources is as smooth as possible, or at least does not contain significant ripple on frequencies that would cause the emitted light to flicker in a way that has an effect on users.

The driver device of fig. 2 comprises a controllable linear regulator coupled between a second node of the output 103 and the second rail 205. In the schematic representation of fig. 2 said controllable linear regulator takes the form of a MOSFET 206. The drain of the MOSFET 206 is coupled to the second node of the output 103, its source is coupled to the second rail 205, and its gate is available as a control input. According to the known operating principle of MOSFETs, the magnitude of the gate-source voltage determines the conductivity of the channel between the drain and the source. A MOSFET can be used as a controllable linear regulator when it is driven in the linear or ohmic mode, in which V_{GS} > Vₜₕ and V_{DS} < V_{GS}-Vₜₕ where V_{GS} is the gate-source voltage, Vth is the threshold voltage required to establish a conductive channel, and V_{DS} is the drain-source voltage. Other kinds of controllable linear regulators are known and can be used in place of the MOSFET 206; a common feature of such controllable linear regulators is that they have at least three terminals, so that a control signal brought to one of the terminals (the control input) controls the amount of current passed by the controllable linear regulator between the two others.

The controllable linear regulator can be used to achieve a variety of the purposes listed above for the driver device. In particular, it can be used to eliminate flicker of the semiconductor light source that results from ripple in the voltage between the rails 204 and 205 that carries on from the rectification of the mains AC voltage. For this purpose the driver device of fig. 2 comprises a control circuit 207 coupled to produce a control signal to the control input of the controllable linear regulator. Taken the use of a MOSFET 206 as the controllable linear regulator, said control signal may be a potential difference to the potential of the lower rail 205. In particular, the control circuit 207 is configured to produce said control signal in proportion to the potential of the second node of the output 103.

To understand the significance of producing the control signal this way, the presence of AC-rectification-induced ripple in the DC voltage can be understood by considering the DC voltage as the superposition of a steady DC component and a pulsating DC component. Thus while the actual voltage between the rails 204 and 205 maintains its polarity, its momentary value oscillates at the ripple frequency between a minimum value (equal to the magnitude of the steady DC component) and a maximum value (equal to magnitude of the steady DC component plus the amplitude of the pulsating DC component). The voltage drop across the semiconductor light sources connected across the output 103 remains essentially constant at the sum of threshold voltages of series-connected LEDs, so the voltage across the controllable linear regulator is the above-mentioned superposition of the steady and pulsating DC components minus the voltage drop across the semiconductor light sources. In other words, considering the potential of the lower rail 205 as constant (local ground), the potential of the second node of the output 103 exhibits the pulsating behavior at the ripple frequency. When the control signal of the controllable linear regulator is produced in proportion to the potential of the second node of the output 103, it makes the controllable linear regulator dissipate the pulsating DC component from the voltage across it.

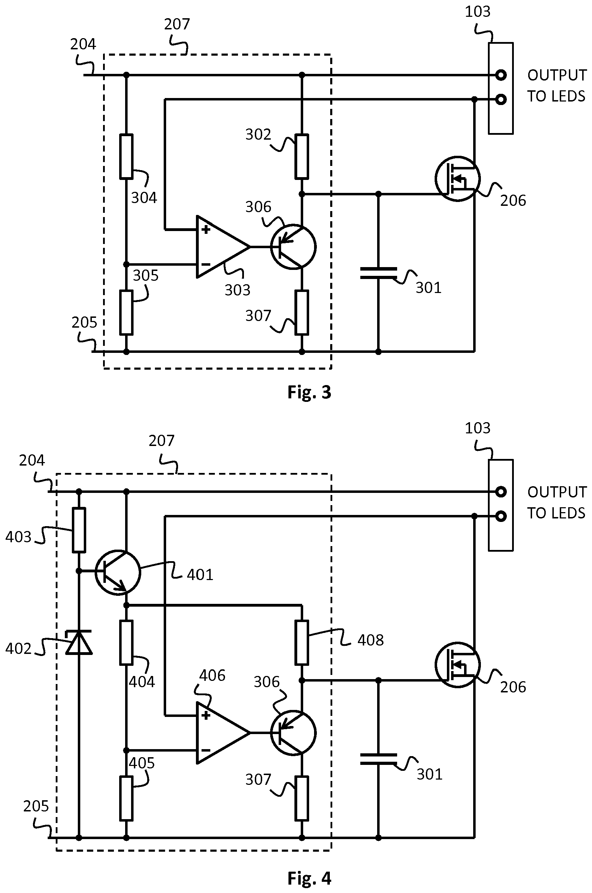

Fig. 3 illustrates schematically a circuit that can be used as the control circuit 207 discussed above. A capacitor 301 is coupled between the control input of the controllable linear regulator (= the gate of the MOSFET 206) and the lower rail 205. The voltage of the capacitor 301 acts as the control signal to the MOSFET 206. A charging resistor 302 coupled between the upper rail 204 and the upper electrode of the capacitor 301 charges the capacitor 301. A differential amplifier 303 is coupled to receive the potential of the lower node of the output 103 to its non-inverting input and a sample of the voltage between the upper and lower rails, taken through the voltage divider 304-305, to its inverting input. The output of the differential amplifier 303 drives the base of a PNP type bipolar junction transistor 306, which acts as a switch on a controllable current path between the gate of the MOSFET 206 and the lower rail 205. Said controllable current path goes additionally through a discharging resistor 307, so called here because when the transistor 306 is conductive, the capacitor 301 discharges through the discharging resistor 307.

The circuit of fig. 3 functions as follows. A current that flows through the charging resistor 302 to the capacitor 301 increases the gate to source voltage of the MOSFET 206, tending to make the MOSFET more conductive, thus drawing the lower node of the output 103 closer to the local ground potential occurring on the lower rail 205. However, a decreasing potential of the lower node of the output 103 lowers the output of the differential amplifier 303, which in turn makes the transistor 306 more conductive, causing the capacitor 301 to discharge. This discharging decreases the gate to source voltage of the MOSFET 206, tending to make the MOSFET less conductive. If, on the other hand, the potential of the lower node of the output 103 suddenly increases, like as a result of the raising edge of a ripple wave, also the output of the differential amplifier 303 goes up, making the transistor 306 non-conductive and blocking the controllable current path 306-307. This allows the charging resistor 302 to top up the capacitor 301 again, increasing the gate to source voltage of the MOSFET 206 and making it counteract the increasing potential of the lower node of the output 103.

Fig. 4 illustrates another embodiment of a circuit that can be used as the control circuit 207. The DC voltage rails 204 and 205, the output 103, the MOSFET 206, and the capacitor 301 are the same as above. The control circuit comprises a constant voltage source consisting of an NPN type bipolar junction transistor 401, the collector of which is coupled to the upper rail 204, and a Zener diode 402, the cathode of which is coupled to the base of the transistor 401 and the anode of which is coupled to the lower rail 205. The base of the transistor 401 is coupled to the upper rail 204 through the resistor 403, and the emitter of the transistor 401 is coupled to the lower rail through the two resistors 404 and 405 that constitute a voltage divider. The middle point of this voltage divider is coupled to the inverting input of a differential amplifier 406, the non-inverting input of which is coupled to the lower node of the output 103. The output of the differential amplifier 406 is coupled to the base of a PNP type bipolar junction transistor 306, the emitter of which is coupled to the emitter of the NPN type bipolar junction transistor 401 through a charging resistor 408. The collector of the PNP type bipolar junction transistor 407 is coupled to the lower rail 205 through a discharging resistor 307. Thus the transistor 306 and the resistor 307 constitute a controllable current path capable of discharging the capacitor 301 in a similar way as above in fig. 3.

The differential amplifier 406 acts as a comparator that is configured to receive as inputs the potential of the second node of the output 103 and the potential maintained by the voltage source 401-402-403 at the middle point of the voltage divider 404-405. The output of the differential amplifier controls the conductivity of the controllable current path 306-307 in the same way as described above with reference to fig. 3, with the difference that the reference potential at the inverting input of the differential amplifier 406, to which the potential of the lower node of the output 103 is compared, now remains constant. The emitter of the NPN type bipolar junction transistor 401 exhibits also a constant potential maintained by the constant voltage source 401-402-403, and this constant potential is used as the source from which the charging resistor 408 charges the capacitor 301 at the control input of the controllable linear regulator.

The principle of function of the control circuit 207 of fig. 4 is the same as above: the control circuit is configured to produce the control signal at the control input of the controllable linear regulator at a magnitude proportional to the output of the comparator 406: the larger the output of the comparator 406, the less conductive is the PNP type bipolar junction transistor 306, and the higher becomes the voltage across the capacitor 301. Proportionality does not necessarily mean exact proportionality in mathematical sense; rather it is meant here that changes in the control signal delivered to the controllable linear regulator take place according to an unambiguous and monotonous function. In this sense proportionality may mean even inverse proportionality, and this is very much in order, because some types of controllable linear regulators may operate in an inverse manner compared to what has been said above about the MOSFET 206.

Above it was noted that the potential of the lower node of the output 103 pulsates at the ripple frequency. Thus when the control circuit 207 produces the control signal to the controllable linear regulator at a form and magnitude that follow the same pulsating nature, it makes the linear regulator dissipate the pulsating component from the voltage across it. The selected control approach optimizes the biasing of the controllable linear regulator, so that it dissipates very little energy at those moments when the pulsating DC component is close to zero, and only serves to cut off the actual ripple peaks that would cause the flickering of the semiconductor light sources. This optimization means that the waste heat is produced (and energy in general is wasted) only the minimum amount necessary. As an additional advantage the circuit maintains its optimized behavior even when the unavoidable aging of the filter capacitors cause the amplitude of the pulsating DC component to increase over time: the controllable linear regulator remains biased to the bottom level of the pulsations, and continues to dissipate the peaks of the pulsations even if they tend to get higher.

Above it was also noted that the driver device of fig. 4 comprises a coupling (= current path through charging resistor 408) from a potential maintained by the constant voltage source (= emitter potential of transistor 401) to the control input of the controllable linear regulator (= gate of MOSFET 206). The control circuit comprises a controllable current path between said control input (= gate of MOSFET 206) and a neutral potential (= local ground at rail 205), and the voltage dissipating property of the controllable linear regulator (=ohmic conductivity between drain and source in MOSFET 206) is proportional to the potential difference between the control signal (= gate potential of MOSFET 206) and said neutral potential. The output of the comparator (= differential amplifier 406) is configured to control the conductivity of the first current path, through the base of transistor 306. Thus the transistor 306 acts as the switch of the controllable current path, which also comprises the discharging resistor 307.

The resistances of the charging resistor 408 and the discharging resistor 307 may be selected so that the discharging resistance is smaller than the charging resistance. This has the effect that the voltage of capacitor 301 discharges relatively quickly whenever the transistor 306 is conductive, but builds up again relatively slowly when the transistor 306 is not conductive. Said difference between the charging and discharging resistances may be significant: the resistance of the charging resistor 408 may be some 50 to 100 times the resistance of the discharging resistor 307. The relatively quick discharging and relatively slow re-charging of the capacitor 301 helps to optimize the waveform of the desired dissipation of excess voltage across the MOSFET 206.

Irrespective of whether the control circuit 207 employs the approach of fig. 3 or that of fig. 4, or any other approach, the driver device may comprise an overcurrent protector configured to respond to a current higher than a predetermined limit in the output with a quick limiting action. An overcurrent protector is schematically illustrated as block 208 in fig. 2. Since the controllable linear regulator is there anyway on the main current path, such limiting action may be advantageously implemented by disabling the flow of current through the linear regulator, as illustrated schematically with the arrow from block 208 towards the gate of the MOSFET 206 in fig. 2.

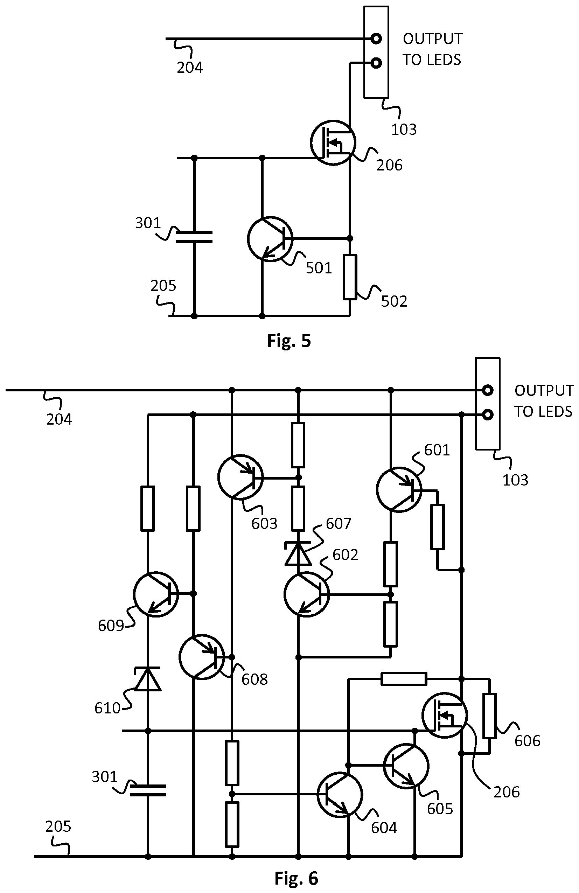

An example of an overcurrent protector of this kind is shown in fig. 5. The output 103, the DC voltage rails 204 and 205, the MOSFET 206, and the capacitor 301 are the same as in the preceding drawings. A control circuit of the kind shown with reference designator 207 in figs. 2, 3, or 4 is assumed to exist, but is not shown in fig. 5 for graphical clarity. The gate of the MOSFET 206 constitutes the control input of the controllable linear regulator. The overcurrent protector of fig. 5 comprises a controllable current path between the control input and the neutral potential (= the potential of the lower rail 205), said controllable current path consisting essentially of the NPN type bipolar junction transistor 501, the collector of which is coupled to the gate of the MOSFET 206 and the emitter of which is coupled to the lower rail 205. Additionally there is a current sensing resistor 502 on the main current path, on which overcurrent protection should be established. Since the main current path goes through the nodes of the output 103, the current sensing resistor 502 is coupled to one of the nodes of the output 103, but the coupling does not need to be direct: for example in fig. 5 the coupling is through the MOSFET 206.

The voltage across the current sensing resistor 502 acts as the gate-emitter voltage of the transistor 501. Thus the transistor 501 acts as a switch configured to close in response to an increasing voltage across the current sensing resistor 502. In other words, if the current on the main current path increases beyond a threshold at which the voltage drop in the current sensing resistor is sufficient to turn transistor 501 conductive, any voltage in the capacitor 301 discharges through transistor 501, and the MOSFET 206 ceases to conduct, putting an end to the overcurrent situation.

Irrespective of whether the control circuit 207 employs the approach of fig. 3 or that of fig. 4, or any other approach, and also irrespective of whether the driver device comprises an overcurrent protector or not, the driver device may comprise a short circuit protection coupling configured to respond to a voltage smaller than a predetermined threshold across the output 103 with limiting action. A short circuit protection coupling of this kind is schematically shown as block 209 in fig. 2. Since the controllable linear regulator is there anyway on the main current path, such limiting action may be advantageously implemented by disabling the flow of current through the linear regulator, as illustrated schematically with the arrow from block 209 towards the gate of the MOSFET 206 in fig. 2.

In addition to protective functions that act to disable the flow of current through the output in exceptional situations, the driver device advantageously includes a startup circuit, the task of which is to ensure that the flow of current through the semiconductor light source(s) begins in a reliable and controlled fashion when appropriate. A startup circuit of this kind is configured to respond to the potential difference between the first and second rails increasing from zero to a startup voltage by enabling the flow of current through the linear regulator.

Since the tasks of a short circuit protection coupling and a startup circuit are conceptually linked together (disabling/enabling the flow of current) and also the criteria used to trigger their function may have certain mutual relations (voltage at or close to the output), it may be advantageous to implement the functions of a short circuit protection coupling 209 and a startup circuit 210 with at least partly shared components and circuit elements.

Fig. 6 illustrates an example of a coupling that implements the functions of both a short circuit protection coupling and a startup circuit. The output 103, the DC voltage rails 204 and 205, the MOSFET 206, and the capacitor 301 are the same as in the preceding drawings. A control circuit of the kind shown with reference designator 207 in figs. 2, 3, or 4 is assumed to exist, but is not shown in fig.6 for graphical clarity. Also an overcurrent protector, for example according to fig. 5, may be included but is not shown in fig. 6.

Concerning the operation of the coupling of fig. 6, a short circuit across the output 103 would mean that both nodes of the output are at essentially the same potential. This makes transistor 601 non-conductive, which in turn deprives transistor 602 of gate-emitter voltage and makes it also non-conductive. The base potential of transistor 603 becomes equal to the potential of the upper rail 204, so also transistor 603 ceases to conduct. The base potential of transistor 604 becomes equal to the potential of the lower rail 205, so transistor 604 ceases to conduct. This allows the base potential of transistor 605 to increase to essentially the potential of the lower node of the output 103, making transistor 605 conductive and thus creating a conductive current path between the gate of the MOSFET 605 and the lower rail 205. In line with the description of figs. 4 and 5 above it can be said that the short circuit protection coupling comprises a controllable current path (through transistor 605) between the control input of the linear regulator (the gate of MOSFET 206) and a neutral potential (rail 205), wherein the controllable current path comprises a switch (transistor 605) configured to close in response to the voltage across the output 103 becoming smaller than a predetermined threshold.

At startup the MOSFET 206 initially has no gate to source voltage at all, so it does not conduct. When a switched-mode power supply begins to pump electric energy into the circuit, the voltage between the rails 204 and 205 begins to increase from zero. A small bypass current flows through resistor 606, allowing a voltage drop to develop across the output 103, thus creating a base-emitter voltage for transistor 601, which becomes conductive. This makes also transistor 602 conductive, but no current begins to flow through it before the potential of the upper rail 204 has become high enough to exceed the reverse threshold voltage of the Zener diode 207. Meanwhile the increase in the potential of the lower node of the output 103 has caused the base potential of transistor 605 to increase, making transistor 605 conductive, which ensures that the MOSFET stays still non-condutive. This "inhibition period" of very little actual output current is advantageous, because in many cases the startup phase operation of the switched-mode power supply may be more reliable and deterministic when the voltage on its secondary side is allowed to increase beyond a predetermined threshold before the load current begins to flow. For example a flyback type switched-mode power supply may have an auxiliary coil, through which a control circuit of the switched-mode power supply receives a demagnetization signal from the flyback transformer. The demagnetization signal may accidentally remain too small to be appropriately noticed, unless the secondary side voltage of the flyback type switched-mode power supply gets the chance to increase beyond a predetermined threshold.

When the Zener diode 607 reaches its reverse threshold voltage and begins to conduct, the transistor 603 gets a base-emitter voltage and becomes conductive. This makes transistor 608 non-conductive, which in turn allows the base potential of transistor 609 to increase, and transistor 609 becomes conductive. At the same time the current through transistor 603 provides a gate-emitter voltage to transistor 604, which becomes conductive and blocks the previously described discharging current path through transistor 605 by effectively grounding the base of transistor 605. The reverse threshold voltage of the Zener diode 610 is eventually exceeded, which causes a rapid first charging kick to capacitor 301 and the gate capacitance of the MOSFET 206. Waiting for the Zener diode 610 to become conductive also ensures that transistor 604 has time to block transistor 605 before the charging current begins to flow to the capacitor 301. The MOSFET 206 eventually becomes conductive, the current through the output 103 is free to pass, and the normal operation begins. In line with the description of figs. 4 and 5 above it can be said that the startup circuit comprises a threshold-triggered current path (through transistor 609 and Zener diode 610) between the second node of the output 103 and the control input of the controllable linear regulator (= gate of MOSFET 206). This threshold-triggered current path is configured to become conductive in response to the potential difference between the first and second rails 204 and 205 increasing from zero to beyond a predetermined threshold.

Changes and modifications can be made to the exemplary embodiments described above without departing from the scope of protection defined by the appended claims. For example, circuits employing PNP transistors can often be replaced with circuits employing NPN transistors and vice versa, by taking care of the appropriate polarities of all signals and voltages. Also, while the embodiments of both figures 3 and 4 use the output of the differential amplified only indirectly as the control signal to the controllable linear regulator, differential amplifiers exist that could be used to directly drive the MOSFET or otherwise directly issue the control signal from their output to the linear regulator. Various kinds of controllable linear regulators can be used, and not only MOSFET-based. The overcurrent protector can be located at different points on the main current path than just between the controllable linear regulator and the lower voltage rail, and in some cases even indirect monitoring of the output current may be used instead of the voltage across a current sensing resistor on the main current path to trigger overcurrent protection measures. Components that have been illustrated as discrete components may be combined into integrated circuits in various ways.

## Claims

1. A driver device for one or more semiconductor light sources, comprising:
- a switched-mode power supply (201) coupled to receive a rectified AC voltage and configured to convert it into a DC voltage between a first rail (204) and a second rail (205),
- an output (103) for coupling said one or more semiconductor light sources, a first node of said output (103) coupled to said first rail (204),
- a controllable linear regulator (206) coupled between a second node of said output (103) and said second rail (205), and
- a control circuit (207) coupled to produce a control signal to a control input of said controllable linear regulator (206), thereby configured to control the amount of current passed by said controllable linear regulator (206);
wherein said control circuit (207) is configured to produce said control signal in proportion to the potential of said second node of said output (103);
**characterized in that**:
- the driver device comprises a capacitor (301) coupled between the control input of the controllable linear regulator (206) and said second rail (205), and
- the driver device is configured to charge said capacitor (301) through a charging resistance (302, 408) if a potential of the second node of said output (103) increases and to controllably discharge said capacitor (301) through a discharging resistance (307) if a potential of the second node of said output (103) decreases.

2. A driver device according to claim 1, wherein:
- said control circuit (207) is configured to produce said control signal at a form and magnitude that make said linear regulator (206) dissipate the pulsating DC component from a voltage across it having a steady DC component and a pulsating DC component.

3. A driver device according to claim 2, wherein:
- said control circuit (207) comprises a constant voltage source (401, 402, 403),
- said control circuit (207) comprises a comparator (406) configured to receive as inputs the potential of said second node of said output (103) and a potential maintained by said constant voltage source (401, 402, 403),
- said control circuit (207) is configured to produce said control signal at a magnitude proportional to the output of said comparator (406).

4. A driver device according to claim 3, wherein a coupling from a potential maintained by said constant voltage source (401, 402, 403) to said control input of said controllable linear regulator (206) goes through said charging resistance.

5. A driver device according to claim 4, wherein:
- the control circuit (207) comprises a first controllable current path (306, 307) between the control input of said linear regulator (206) and a neutral potential, and the voltage dissipating property of said controllable linear regulator is proportional to the potential difference between said control signal and said neutral potential, and
- the output of said comparator (406) is configured to control the conductivity of said first controllable current path (306, 307).

6. A driver device according to claim 5, wherein:
- said first controllable current path comprises a first switch (306) and said discharging resistance (307), and
- said discharging resistance (307) is smaller than said charging resistance (302, 408).

7. A driver device according to any of the preceding claims, comprising a overcurrent protector (208) configured to respond to a current higher than a predetermined limit in said output (103) by disabling the flow of current through said linearregulator (206).

8. A driver device according to claim 7, wherein:
- said overcurrent protector (208) comprises a second controllable current path between the control input of said linear regulator (206) and a neutral potential, and the voltage dissipating property of said controllable linear regulator (206) is proportional to the potential difference between said control signal and said neutral potential, and
- said second controllable current path comprises a second switch (501) configured to close in response to an increasing voltage across a current sensing resistor (502) coupled to one of the nodes of said output (103).

9. A driver device according to any of the preceding claims, comprising a short circuit protection coupling (209) configured to respond to a voltage smaller than a first predetermined threshold across said output (103) by disabling the flow of current through said linear regulator (206).

10. A driver device according to claim 9, wherein:
- said short circuit protection coupling (209) comprises a third controllable current path between the control input of said linear regulator (206) and a neutral potential, and the voltage dissipating property of said controllable linear regulator (206) is proportional to the potential difference between said control signal and said neutral potential, and
- said third controllable current path comprises a third switch (605) configured to close in response to said voltage smaller than the first predetermined threshold across said output (103).

11. A driver device according to any of the preceding claims, comprising a startup circuit (210) configured to respond to the potential difference between said first (204) and second (205) rails increasing from zero to a startup voltage by enabling the flow of current through said linear regulator (206).

12. A driver device according to claim 11, wherein said startup circuit (210) comprises a threshold-triggered current path (609, 610) between the second node of said output (103) and said control input, wherein said threshold-triggered current path (609, 610) is configured to become conductive in response to the potential difference between said first (204) and second (205) rails increasing from zero to beyond a second predetermined threshold.

13. A method for driving current through one or more semiconductor light sources, comprising:
- converting a rectified AC voltage into a DC voltage between a first rail (204) and a second rail (205),
- using said DC voltage to drive a current through said one or more semiconductor light sources and a linear regulator (206), and
- controlling the regulation performed by said linear regulator (206) in proportion to the voltage across said linear regulator;
**characterized in that** the method comprises:
- controlling said linear regulator with a capacitor (301) coupled between a control input of the linear regulator (206) and said second rail (205), and
- charging said capacitor (301) through a charging resistance (302, 408) if a potential of the second node of said output (103) increases and controllably discharging said capacitor (301) through a discharging resistance (307) if a potential of the second node of said output (103) decreases.

14. A method according to claim 13, wherein the regulation is controlled such that the linear regulator (206) dissipates the pulsating DC component from a voltage across it with a steady DC component and a pulsating DC component.

## Patentansprüche

1. Treibervorrichtung für eine oder mehr Halbleiterlichtquellen, umfassend:
- eine Schaltstromversorgung (201), die dazu gekoppelt ist, eine gleichgerichtete Wechselspannung zu empfangen, und dazu konfiguriert ist, sie in eine Gleichspannung umzuwandeln, zwischen einer ersten Schiene (204) und einer zweiten Schiene (205),
- einen Ausgang (103) zum Koppeln der einen oder mehr Halbleiterlichtquellen, wobei ein erster Knoten des Ausgangs (103) mit der ersten Schiene (204) gekoppelt ist,
- einen steuerbaren Linearregler (206), der zwischen einem zweiten Knoten des Ausgangs (103) und der zweiten Schiene (205) gekoppelt ist, und
- eine Steuerschaltung (207) die dazu gekoppelt ist, ein Steuersignal zu einem Steuereingang des steuerbaren Linearreglers (206) zu erzeugen, und dadurch dazu konfiguriert ist, die Strommenge zu steuern, die durch den steuerbaren Linearregler (206) passiert;
wobei die Steuerschaltung (207) dazu konfiguriert ist, das Steuersignal proportional zu dem Potential des zweiten Knotens des Ausgangs (103) zu erzeugen;
**dadurch gekennzeichnet, dass**:
- die Treibervorrichtung einen Kondensator (301) umfasst, der zwischen dem Steuereingang des steuerbaren Linearreglers (206) und der zweiten Schiene (205) gekoppelt ist, und
- die Treibervorrichtung dazu konfiguriert ist, den Kondensator (301) durch einen Ladewiderstand (302, 408) zu laden, wenn ein Potential des zweiten Knotens des Ausgangs (103) zunimmt, und den Kondensator (301) gesteuert durch einen Entladewiderstand (307) zu entladen, wenn ein Potential des zweiten Knotens des Ausgangs (103) abnimmt.

2. Treibervorrichtung nach Anspruch 1, wobei:
- die Steuerschaltung (207) dazu konfiguriert ist, das Steuersignal mit einer Form und einer Größe zu erzeugen, die bewirkt, dass der Linearregler (206) die pulsierende Gleichstromkomponente von einer Spannung über ihn hinweg mit einer gleichförmigen Gleichstromkomponente und einer pulsierenden Gleichstromkomponente abführt.

3. Treibervorrichtung nach Anspruch 2, wobei:
- die Steuerschaltung (207) eine Konstantspannungsquelle (401, 402, 403) umfasst,
- die Steuerschaltung (207) einen Komparator (406) umfasst, der dazu konfiguriert ist, als Eingaben das Potential des zweiten Knotens des Ausgangs (103) und ein Potential zu empfangen, das durch die Konstantspannungsquelle (401, 402, 403) gehalten wird,
- die Steuerschaltung (207) dazu konfiguriert ist, das Steuersignal mit einer Größe proportional zur Ausgabe des Komparators (406) zu erzeugen.

4. Treibervorrichtung nach Anspruch 3, wobei eine Kopplung von einem Potential, das durch die Konstantspannungsquelle (401, 402, 403) gehalten wird, zu dem Steuereingang des steuerbaren Linearreglers (206) durch den Ladewiderstand geht.

5. Treibervorrichtung nach Anspruch 4, wobei:
- die Steuerschaltung (207) einen ersten steuerbaren Strompfad (306, 307) zwischen dem Steuereingang des Linearreglers (206) und einem Neutralpotential umfasst, und die Spannungsabführungseigenschaft des steuerbaren Linarreglers proportional zur Potentialdifferenz zwischen dem Steuersignal und dem Neutralpotential ist, und
- die Ausgabe des Komparators (406) dazu konfiguriert ist, die Leitfähigkeit des ersten steuerbaren Strompfads (306, 307) zu steuern.

6. Treibervorrichtung nach Anspruch 5, wobei:
- der erste steuerbare Strompfad einen ersten Schalter (306) und den Entladewiderstand (307) umfasst, und
- der Entladewiderstand (307) kleiner ist als der Ladewiderstand (302, 408).

7. Treibervorrichtung nach einem der vorhergehenden Ansprüche, umfassend einen Überstromprotektor (208), der dazu konfiguriert ist, auf einen Strom größer als eine vorbestimmte Grenze in der Ausgabe (103) zu reagieren, indem der Fluß von Strom durch den Linearregler (206) unterbunden wird.

8. Treibervorrichtung nach Anspruch 7, wobei:
- der Überstromprotektor (208) einen zweiten steuerbaren Strompfad zwischen dem Steuereingang des Linearreglers (206) und einem Neutralpotential umfasst, und die Spannungsabführungseigenschaft des steuerbaren Linearreglers (206) proportional zur Potentialdifferenz zwischen dem Steuersignal und dem Neutralpotential ist, und
- der zweite steuerbare Strompfad einen zweiten Schalter (501) umfasst, der dazu konfiguriert ist, in Antwort auf eine ansteigende Spannung über einen Strommesswiderstand (502) hinweg zu schließen, der mit einem der Knoten des Ausgangs (103) gekoppelt ist.

9. Treibervorrichtung nach einem der vorhergehenden Ansprüche, umfassend eine Kurzschlussschutzkopplung (209), die dazu konfiguriert ist, auf eine Spannung kleiner als eine erste vorbestimmte Schwelle über den Ausgang (103) hinweg zu reagieren, indem der Fluss von Strom durch den Linearregler (206) unterbunden wird.

10. Treibervorrichtung nach Anspruch 9, wobei:
- die Kurzschlussschutzkopplung (209) einen dritten steuerbaren Strompfad zwischen dem Steuereingang des Linearreglers (206) und einem Neutralpotential umfasst, und die Spannungsabführungseigenschaft des steuerbaren Linearreglers (206) proportional zur Potentialdifferenz zwischen dem Steuersignal und dem Neutralpotential ist, und
- der dritte steuerbare Strompfad einen dritten Schalter (605) umfasst, der dazu konfiguriert ist, in Antwort darauf zu schließen, dass die Spannung kleiner als die erste vorbestimmte Schwelle über den Ausgang (103) hinweg ist.

11. Treibervorrichtung nach einem der vorhergehenden Ansprüche, umfassend eine Anlaufschaltung (210), die dazu konfiguriert ist, darauf zu reagieren, dass die Potentialdifferenz zwischen der ersten (204) und der zweiten (205) Schiene von Null zu einer Anlaufspannung ansteigt, indem der Fluss von Strom druch den Linearregler (206) ermöglicht wird,

12. Treibervorrichtung nach Anspruch 11, wobei die Anlaufschaltung (210) einen schwellengetriggerten Strompfad (609, 610) zwischen dem zweiten Knoten des Ausgangs (103) und dem Steuereingang umfasst, wobei der schwellengetriggerte Strompfad (609, 610) dazu konfiguriert ist, in Antwort darauf leitend zu werden, dass die Potentialdifferenz zwischen der ersten (204) und der zweiten (205) Schiene von Null zu jenseits einer zweiten vorbestimmten Schwelle ansteigt.

13. Verfahren zum Treiben von Strom durch eine oder mehr Halbleiterlichtquellen, umfassend:
- Umwandeln einer gleichgerichteten Wechselspannung in eine Gleichspannung zwischen einer ersten Schiene (204) und einer zweiten Schiene (205),
- Verwenden der Gleichspannung zum Treiben eines Stroms duch die eine oder mehr Halbleiterlichtquellen und einen Linearregler (206), und
- Steuern der Regelung, die durch den Linearregler (206) durchgeführt wird, proportional zu der Spannung über den Linearregler hinweg;
**dadurch gekennzeichnet, dass** das Verfahren umfasst:
- Steuern des Linearreglers mit einem Kondensator (301), der zwischen einem Steuereingang des Linearreglers (206) und der zweiten Schiene (205) gekoppelt ist, und
- Laden des Kondensators (301) durch einen Ladewiderstand (302, 408), wenn ein Potential des zweiten Knotens des Ausgangs (103) zunimmt, und gesteuertes Entladen des Kondensators (301) durch einen Entladewiderstand (207), wenn ein Potential des zweiten Knotens des Ausgangs (103) abnimmt.

14. Verfahren nach Anspruch 13, wobei die Regelung derart gesteuert wird, dass der Linearregler (206) die pulsierende Gleichstromkomponente von einer Spannung über ihn hinweg mit einer gleichförmigen Gleichstromkomponente und einer pulsierenden Gleichstromkomponente abführt.

## Revendications

1. Dispositif pilote pour une ou plusieurs sources lumineuses à semi-conducteur, comprenant :
- une alimentation à découpage (201) couplée pour recevoir une tension alternative redressée et configurée pour la convertir en une tension CC entre un premier rail (204) et un deuxième rail (205),
- une sortie (103) pour coupler lesdites une ou plusieurs sources lumineuses à semi-conducteur, un premier nœud de ladite sortie (103) étant couplé audit premier rail (204),
- un régulateur linéaire contrôlable (206) couplé entre un deuxième nœud de ladite sortie (103) et ledit deuxième rail (205), et
- un circuit de commande (207) couplé pour produire un signal de commande à une entrée de commande dudit régulateur linéaire contrôlable (206), ainsi configuré pour contrôler la quantité de courant passé par ledit régulateur linéaire contrôlable (206) ;
dans lequel ledit circuit de commande (207) est configuré pour produire ledit signal de commande proportionnellement au potentiel dudit deuxième nœud de ladite sortie (103) ;
**caractérisé en ce que** :
- le dispositif pilote comprend un condensateur (301) couplé entre l'entrée de commande du régulateur linéaire contrôlable (206) et ledit deuxième rail (205), et
- le dispositif pilote est configuré pour charger ledit condensateur (301) à travers une résistance de charge (302, 408) si un potentiel du deuxième nœud de ladite sortie (103) augmente et pour décharger de manière contrôlable ledit condensateur (301) à travers une résistance de décharge (307) si un potentiel du deuxième nœud de ladite sortie (103) diminue.

2. Dispositif pilote selon la revendication 1, dans lequel :
- ledit circuit de commande (207) est configuré pour produire ledit signal de commande sous une forme et une amplitude qui font que ledit régulateur linéaire (206) dissipe la composante CC pulsatoire à partir d'une tension aux bornes de celui-ci ayant une composante CC stable et une composante CC pulsatoire.

3. Dispositif pilote selon la revendication 2, dans lequel :
- ledit circuit de commande (207) comprend une source de tension constante (401, 402, 403),
- ledit circuit de commande (207) comprend un comparateur (406) configuré pour recevoir en entrée le potentiel dudit deuxième nœud de ladite sortie (103) et un potentiel maintenu par ladite source de tension constante (401, 402, 403),
- ledit circuit de commande (207) est configuré pour produire ledit signal de commande à une amplitude proportionnelle à la sortie dudit comparateur (406).

4. Dispositif pilote selon la revendication 3, dans lequel un couplage entre un potentiel maintenu par ladite source de tension constante (401, 402, 403) et ladite entrée de commande dudit régulateur linéaire contrôlable (206) passe par ladite résistance de charge.

5. Dispositif pilote selon la revendication 4, dans lequel :
- le circuit de commande (207) comprend un premier chemin de courant contrôlable (306, 307) entre l'entrée de commande dudit régulateur linéaire (206) et un potentiel neutre, et la capacité de dissipation de tension dudit régulateur linéaire contrôlable est proportionnel à la différence de potentiel entre ledit signal de commande et ledit potentiel neutre, et
- la sortie dudit comparateur (406) est configurée pour contrôler la conductivité dudit premier chemin de courant contrôlable (306, 307).

6. Dispositif pilote selon la revendication 5, dans lequel :
- ledit premier chemin de courant contrôlable comprend un premier interrupteur (306) et ladite résistance de décharge (307), et ladite résistance de décharge (307) est plus petite que ladite résistance de charge (302, 408).

7. Dispositif pilote selon l'une quelconque des revendications précédentes, comprenant un protecteur de surintensité (208) configuré pour répondre à un courant supérieur à une limite prédéterminée dans ladite sortie (103) en désactivant le flux de courant à travers ledit régulateur linéaire (206).

8. Dispositif pilote selon la revendication 7, dans lequel :
- ledit protecteur de surintensité (208) comprend un deuxième chemin de courant contrôlable entre l'entrée de commande dudit régulateur linéaire (206) et un potentiel neutre, et la capacité de dissipation de tension dudit régulateur linéaire contrôlable (206) est proportionnelle à la différence de potentiel entre ledit signal de commande et ledit potentiel neutre, et
- ledit deuxième chemin de courant contrôlable comprend un deuxième interrupteur (501) configuré pour se fermer en réponse à une tension croissante aux bornes d'une résistance de détection de courant (502) couplée à l'un des les nœuds de ladite sortie (103).

9. Dispositif pilote selon l'une quelconque des revendications précédentes, comprenant un couplage de protection contre les courts-circuits (209) configuré pour répondre à une tension inférieure à un premier seuil prédéterminé aux bornes de ladite sortie (103) en désactivant l'écoulement de courant à travers ledit régulateur linéaire (206).

10. Dispositif pilote selon la revendication 9, dans lequel :
- ledit couplage de protection contre les courts-circuits (209) comprend un troisième chemin de courant contrôlable entre l'entrée de commande dudit régulateur linéaire (206) et un potentiel neutre, et la capacité de dissipation de tension dudit régulateur linéaire contrôlable (206) est proportionnelle à la différence de potentiel entre ledit signal de commande et ledit potentiel neutre, et
- ledit troisième chemin de courant contrôlable comprend un troisième interrupteur (605) configuré pour se fermer en réponse à ladite tension étant inférieure au premier seuil prédéterminé aux bornes de ladite sortie (103).

11. Dispositif pilote selon l'une quelconque des revendications précédentes, comprenant un circuit de démarrage (210) configuré pour répondre à l'augmentation d'une différence de potentiel entre lesdits premier (204) et deuxième (205) rails de zéro à une tension de démarrage en permettant l'écoulement de courant à travers ledit régulateur linéaire (206).

12. Dispositif pilote selon la revendication 11, dans lequel ledit circuit de démarrage (210) comprend un chemin de courant déclenché par seuil (609, 610) entre le deuxième nœud de ladite sortie (103) et ladite entrée de commande, dans lequel ledit chemin de courant déclenché par seuil (609, 610) est configuré pour devenir conducteur en réponse à l'augmentation de la différence de potentiel entre lesdits premier (204) et deuxième (205) rails de zéro à au-delà d'un deuxième seuil prédéterminé.

13. Procédé pour conduire du courant à travers une ou plusieurs sources de lumière à semi-conducteur, comprenant :
- la conversion d'une tension alternative redressée en une tension CC entre un premier rail (204) et un deuxième rail (205),
- l'utilisation de ladite tension CC pour conduire un courant à travers lesdites une ou plusieurs sources de lumière à semi-conducteur et un régulateur linéaire (206), et
- la commande de la régulation effectuée par ledit régulateur linéaire (206) proportionnellement à la tension aux bornes dudit régulateur linéaire ;
**caractérisé en ce que** le procédé comprend :
- la commande dudit régulateur linéaire avec un condensateur (301) couplé entre une entrée de commande du régulateur linéaire (206) et ledit deuxième rail (205), et
- la charge dudit condensateur (301) à travers une résistance de charge (302, 408) si un potentiel du deuxième nœud de ladite sortie (103) augmente et la décharge de manière contrôlable dudit condensateur (301) à travers une résistance de décharge (307) si un potentiel du deuxième nœud de ladite sortie (103) diminue.

14. Procédé selon la revendication 13, dans lequel la régulation est commandée de telle sorte que le régulateur linéaire (206) dissipe la composante CC pulsatoire à partir d'une tension aux bornes de celui-ci ayant une composante CC stable et une composante CC pulsatoire.
